# EUROPEAN PATENT APPLICATION

(11) **EP 2 062 764 A1**
(43) Date of publication of application: **27.05.2009**
(21) Application number: 07022477.9
(22) Date of filing: 20.11.2007
(51) Int. Cl.: B60H 3/06

(54) **Photocatalytic filtration system for vehicles**

(71) Applicant: Numerouno Ricerche S.r.L., 20059 Vimercate (MI) (IT)
(72) Inventor: Barucco, Ezio, 37138 Verona (VR) (IT)
(74) Representative: Fisauli, Beatrice A. M.

(57) **Abstract**

Air filtration system for vehicle air-conditioning installations, comprising a photocatalytic compound designed to catalyse a chemical reaction that abates the pollutants present in the air, a light source being fitted to activate said photocatalytic compound, said system including the filling of a significant part of the pipes for the passage of air to be conditioned and purified with first means designed to support said photocatalytic compound, and second means designed to activate said photocatalytic compound, wherein said photocatalytic compound is titanium dioxide in the anatase crystallographic form and the nano-titanium form.

Said first means designed to support said photocatalytic compound comprise expanded glass granules and Sulzer filters made of expanded carbon, treated with a composition containing said titanium dioxide in the anatase crystallographic form and the nano-titanium.

Said means designed to activate said photocatalytic compound comprise a light source consisting of high-intensity LEDs.

## Description

This invention relates to a vehicle air filtration system designed to trap powders, pollens and other particles and to eliminate the pollutants present in the air that enters the vehicle, said system being treated with an impregnating agent containing a photocatalytic compound which, in the presence of light, greatly reduces the concentration of pollutants in the air.

Said photocatalytic compound is made of titanium dioxide which, in the anatase crystallographic form and with a very high specific surface area, promotes the conversion of the pollutants in the air inside the vehicle.

Air pollution is a serious problem, especially in large conurbations, where traffic bans are becoming increasingly frequent. Traffic bans are only imposed in winter, when pollution caused by vehicle traffic is combined with the pollution caused by heating installations. However, some pollutants are due almost solely to vehicle traffic, because they form in internal combustion engines due to the very high temperatures reached in the combustion chambers of said engines.

Said pollutants basically comprise a mixture of nitrogen oxides, identified by the generic chemical formula NO_{X}. As they are produced by vehicle engines, they are present all year round, in quantities directly proportional to the intensity of urban and out-of-town traffic.

This problem is by no means negligible, because atmospheric pollution causes an increase in respiratory diseases and allergies, which can be serious. Consequently, it is not unusual to see people, especially cyclists and motorcyclists, wearing face masks in towns.

However, it is not generally realised that the air inside the vehicle is much more polluted, with the result that the pollutant concentration tends to increase.

According to a study commissioned by Greenpeace from Earth Resource Research, the pollution level inside a motor vehicle is up to eighteen times higher than the external pollution.

This problem is encountered both in slow urban traffic and on motorway journeys. The concentration of pollutants increases with low speed, congested traffic, the age of the vehicle and the use of the heating system. There are three main categories of pollutant: VOC [volatile organic compounds (such as benzenes)], which cause carcinomas, CO (carbon monoxide), which is toxic and especially harmful to patients suffering from ischaemia and pregnant women, and NO_{X} (nitrogen oxides), which are harmful to those suffering from asthma and respiratory disorders.

Face masks, the filters fitted in cars to purify the air entering the interior, and the filters present in the air-conditioning installations of homes, shops and hospitals can trap dust and other particles, but have no effect on the gases in the air, which pass through said filters unchanged.

Patent application no. PC 2005 A 000037, filed by the same applicant, at least partly solves this problem by filtering the air with a filter which at least partly eliminates said pollutants, using the photocatalytic properties of anatase with which said filter is treated.

The treatment involves impregnation with a highly diluted mixture of microfine resin and photocatalytic titanium dioxide.

The photochemical reactivity of the anatase crystallographic form, in the form known as "nano-titanium", led to the choice of this substance to prepare an impregnating product for the treatment of the filter.

The nano-titanium anatase form with a high specific surface area, namely up to 280 m²/g (approx. 30 times the normal surface area), offers considerable qualitative advantages because it performs a photocatalytic function by neutralising numerous pollutants present in the air, thus improving the quality of the filtered air.

It would be useful if this system could also be used to reduce the pollutants in the interior of vehicles, but this has not been feasible to date because, due to the small size of the filter, air passes through it too quickly for pollutant abatement reactions to take place.

The present invention offers a substantial improvement by using a filtration system, as claimed in claim 1, which allows a rapid pollutant abatement reaction.

This result is achieved with a general increase in the surface of the catalyst, said increase being obtained by filling with the catalyst, suitably dispersed on suitable filters and granules, a significant part of the pipes through which the air to be conditioned and purified passes. Lighting systems designed to activate the photocatalytic process are obviously also fitted.

As will be seen from the description below, the advantage of using a filtration system according to the invention is that it not only effectively eliminates pollutant compounds but can also be used in vehicle air-conditioning installations with no particular modifications, merely by replacing the ordinary filter with said granules and inserting cylindrical filters into the air pipes, said granules and filters being suitably treated with the photocatalytic catalyst, and suitable lighting of the catalyst being installed.

The invention will now be described in detail according to a preferred embodiment, by way of example but not of limitation, with reference to the annexed figures, wherein:
- figure 1 shows the expanded glass granules;
- figure 2 shows a Sulzer carbon filter;

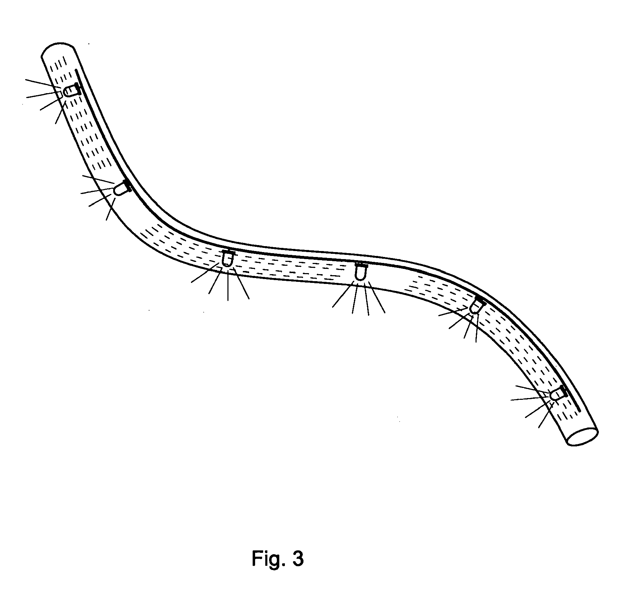

- figure 3 shows a LED cluster of the type which can be used to implement the invention;
- figure 4 shows the results of laboratory tests conducted with samples treated with a photocatalytic compound;
- figures 5 and 6 are two views showing a cross-section of a vehicle ventilation system, modified in accordance with the teachings of the invention to test its efficacy.

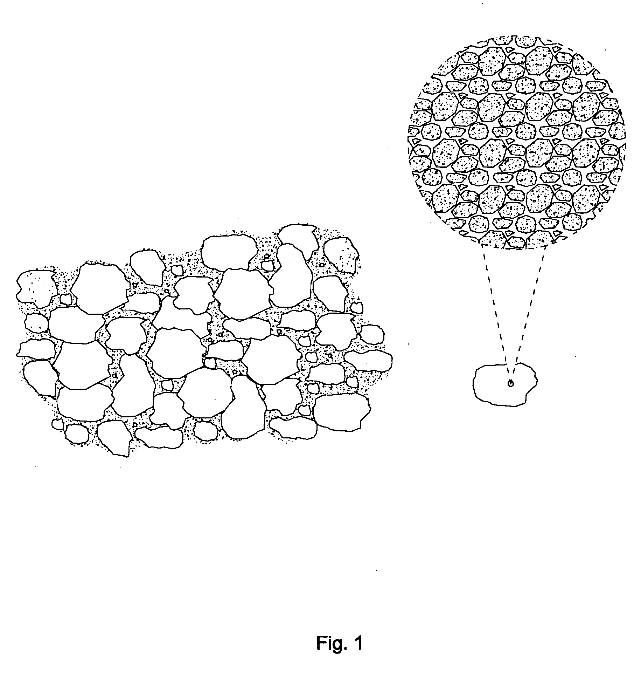

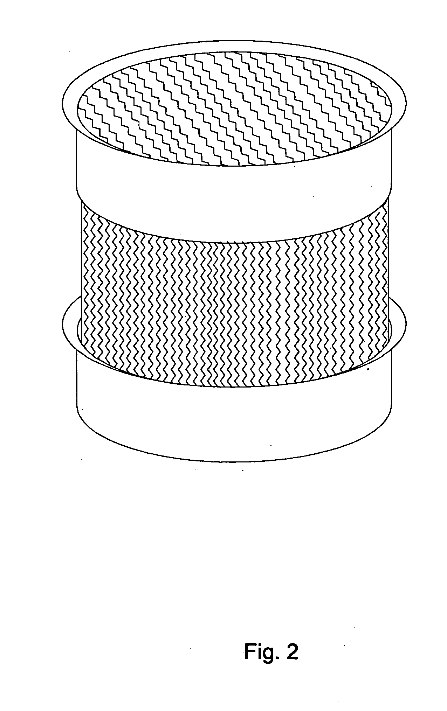

According to a preferred embodiment of the invention, the pipes that convey the air to be purified are filled with expanded glass granules (fig. 1) with very high porosity, and Sulzer carbon filters (fig. 2) treated with a photocatalytic catalyst.

The expanded glass granules have a porosity such that they present a surface area of 1000 m² per volume of one m³ of granules, while the carbon filters have a porosity such as to present a surface area of 1700 m² per volume of one m³ occupied by the filter.

When the air filtration system according to the invention is fitted to an existing vehicle, the seating of the normal air filter to the interior of the vehicle will be packed with expanded glass granules, and the Sulzer carbon filters will be inserted into the air pipes.

A possible example of a composition used for treatment could be as follows:
- 50% microfine acrylic resin 8% ± 4%
- water + various additives 87 % ± 4%
- anatase in the nano-titanium form 5% ± 3%

With the composition described, the microfine acrylic resin has a dry residue of 5%.

In order for the photocatalytic filters to operate, suitable lighting is required to activate the catalytic properties of anatase.

In the case illustrated, namely filters for vehicle use, the lighting can be obtained with a system of high-intensity LEDs operating automatically when the engine is switched on.

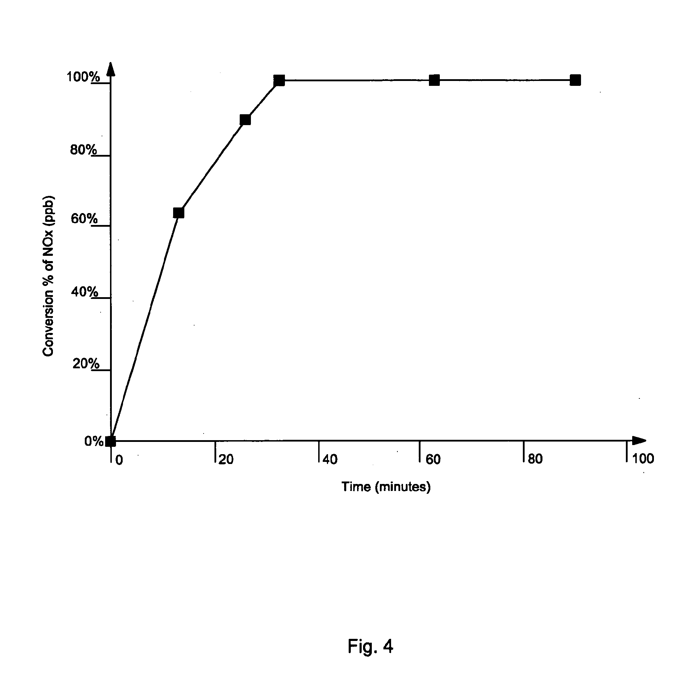

A first laboratory test was conducted with samples treated with photocatalytic compound. With an exchange surface of 96 cm² in a volume of 20 dm³, complete abatement of NOₓ was achieved in approx. 30 minutes (1800 sec) (fig. 4).

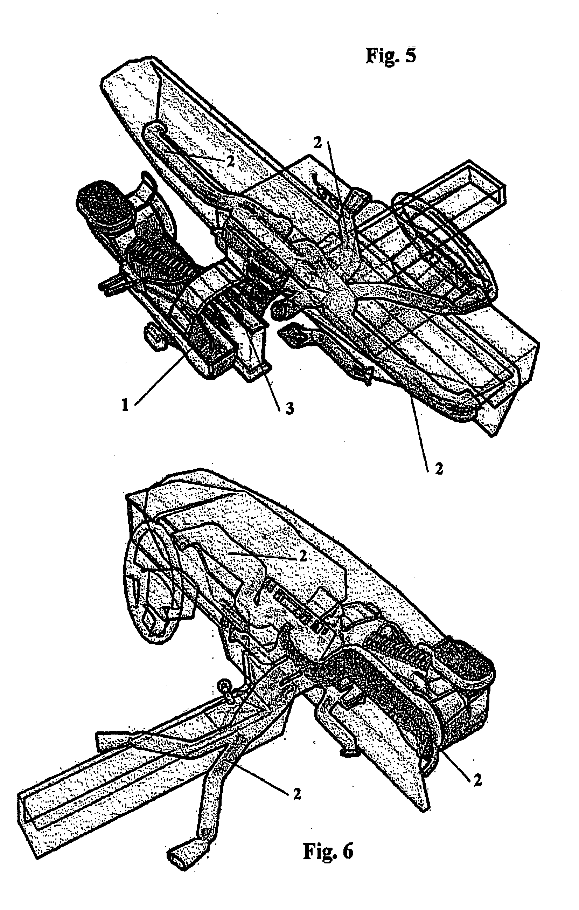

A mass-produced vehicle (Volvo 850) was then fitted with a filtration system according to the invention (figures 5 and 6). Compartment (1), designed for the normal air filter to the interior, was filled with expanded glass granules, and Sulzer carbon filters were inserted into air pipes (2). The expanded glass granules and Sulzer filters were treated with the photocatalytic mixture described above. LED clusters (3), which supply the lighting required to activate the photocatalytic reaction, were then inserted into the filter housing and the pipes.

In the experiment, the volume occupied by the expanded glass granules was 5 dm³ for a treated surface area of approx. 5 m², while the pipes were filled with Sulzer carbon filters for a total volume of 6 dm³, and a treated surface area of approx. 10 m². The result was a total treated surface area of 15 m²_{.}
(In the following and in the claims, the terms "treated-surface" will indicate the sum of the treated surface area of the glass granules and of the Sulzer carbon filters, while the term "volume" will indicate the sum of the volumes of glass granules and of the Sulzer carbon filters).

The catalyst was illuminated as described above.

In the experimental case described, with a treated-surface of 15 m² in a volume of 21 dm³ (treated-surface/volume ratio = 1,36), and lighting with LEDs, complete, immediate abatement of NOₓ was achieved with the passage of air into the filtration unit.

Further tests carried out on different types of cars, confirmed that a complete abatement of NOₓ can be obtained with a filtration system in which the (treated-surface/volume ratio is at least = 1, preferably comprised between 1 and 2).

## Claims

1. Air filtration system for vehicle air-conditioning installations, fitted with a plurality of pipes for the passage of air to be conditioned and purified, of the type comprising a photocatalytic compound designed to catalyse a chemical reaction that abates the pollutants present in the air, a light source being fitted to activate said photocatalytic compound, said system being **characterised in that** it includes the filling of a significant part of said pipes for the passage of air to be conditioned and purified with first means designed to support said photocatalytic compound, and second means designed to activate said photocatalytic compound.

2. Air filtration system as claimed in claim 1, **characterised in that** said photocatalytic compound is titanium dioxide in the anatase crystallographic form and the nano-titanium form.

3. Air filtration system as claimed in claim 1 or 2, **characterised in that** said first means designed to support said photocatalytic compound comprise expanded glass granules treated with a composition containing said titanium dioxide in the anatase crystallographic form and the nano-titanium form.

4. Air filtration system as claimed in claim 1 or 2, **characterised in that** said first means designed to support said photocatalytic compound comprise Sulzer filters made of expanded carbon which are treated with a composition containing said titanium dioxide in the anatase crystallographic form and the nano-titanium form.

5. Filtration system as claimed in any of claims 2 to 4, **characterised in that** said second means designed to activate said photocatalytic compound comprise a light source consisting of high-intensity LEDs.

6. Air filtration system as claimed in any of claims 2 to 5, **characterised in that** said composition, containing said titanium dioxide in the anatase crystallographic form and the nano-titanium form, consists of the following constituents in the percentages indicated:
• 50% microfine acrylic resin 8% ± 4%
• water and various additives 87% ± 4%
• anatase in the nano-titanium form 5% ± 3 %

7. Filtration system as claimed in any of claims 1 to 6, **characterised in that** said expanded glass granules, treated with said composition containing titanium dioxide in the anatase crystallographic form and the nano-titanium form, are placed in the compartment designed to house the normal air filtration system for the interior of the vehicle.

8. Filtration system as claimed in claim 7, **characterised in that** said Sulzer carbon filters, treated with said composition containing said titanium dioxide in the anatase crystallographic form and the nano-titanium form, are placed in the air pipes.

9. Filtration system as claimed in any of claims 1 to 8, **characterised in that** the treated-surface/volume ratio is comprised between 1 and 2 m²/dm³.

10. Filtration system as claimed in any of claim 9, **characterised in that** the treated-surface/volume ratio is approximately 1,35 m²/dm³.
